# EUROPEAN PATENT APPLICATION

(11) **EP 4 339 871 A1**
(43) Date of publication of application: **20.03.2024**
(21) Application number: 23162096.4
(22) Date of filing: 15.03.2023
(51) Int. Cl.: G06Q 30/0645, G06Q 30/0601, G06Q 50/30, G06F 8/71, G06F 8/65

(54) **INTERNET OF VEHICLES-BASED DIGITAL COMMODITY PROCESSING METHOD, APPARATUS, AND MEDIUM**

(30) Priority: 16.09.2022 CN 202211130338
(71) Applicant: Chongqing Changan New Energy Vehicles Technology Co., Ltd, Chongqing 401133 (CN)
(72) Inventor: LV, Xiong, Chongqing, 401133 (CN); WEN, Jie, Chongqing, 401133 (CN); DUAN, Peng, Chongqing, 401133 (CN); LONG, Meiyuan, Chongqing, 401133 (CN)
(74) Representative: 2K Patentanwälte Blasberg Kewitz & Reichel

(57) **Abstract**

Involved are an Internet of vehicles-based digital commodity processing method and apparatus, a device, and a medium. The method includes: establishing a device model corresponding to each vehicle-mounted device based on an available function and communication mode of each vehicle-mounted device on a target vehicle, the vehicle-mounted devices including a gateway device, a gateway sub device, and a direct connection device; determining an association relationship between the device models based on an association relationship between the gateway device, the gateway sub device, and the direct connection device; generating a method routing table corresponding to available service on the target vehicle based on the association relationship between the device models; and associating, based on a function requirement corresponding to a digital commodity to be created, a method routing table corresponding to available service corresponding to the function requirement, to obtain a target digital commodity. Therefore, repeated development of digital commodities can be reduced, and Internet of vehicles-based development efficiency of digital commodities can be improved.

## Description

### Field of the Invention

The present application relates to the field of Internet of vehicles technology, and particularly to an Internet of vehicles-based digital commodity processing method and apparatus, a device, and a medium.

### Background of the Invention

With the constant development of Internet of vehicles technology, more and more vehicle-mounted devices access the Internet. As hardware performance of a vehicle increases, extensibility of software functions of the vehicle has also been improved greatly, and thus various digital commodities corresponding to the software functions of the vehicle have emerged. In a current technical solution, software development is usually performed for a new digital commodity in a programming manner according to function definitions, and when another digital commodity needs to be implemented, software development is performed again according to the same process. This brings about a high repeated development rate and a relatively high driving cost. Therefore, how to reduce repeated development of digital commodities and improve Internet of vehicles-based development efficiency of digital commodities becomes a technical problem urgent to be solved.

### Summary of the Invention

The present application provides an Internet of vehicles-based digital commodity processing method and apparatus, a device, and a medium. The problem of relatively high development cost caused by a high repeated development rate of digital commodities in the related art is solved. According to the present application, repeated development of digital commodities can be reduced, and Internet of vehicles-based development efficiency of digital commodities can be improved.

According to a first aspect, an embodiment of the present application provides an Internet of vehicles-based digital commodity processing method, applied to a cloud. The method includes the following steps: establishing a device model corresponding to each vehicle-mounted device based on an available function and communication mode of each vehicle-mounted device on a target vehicle, the vehicle-mounted devices including a gateway device, a gateway sub device, and a direct connection device; determining an association relationship between the device models based on an association relationship between the gateway device, the gateway sub device, and the direct connection device; generating a method routing table corresponding to available service on the target vehicle based on the association relationship between the device models; and associating, based on a function requirement corresponding to a digital commodity to be created, a method routing table corresponding to available service corresponding to the function requirement, to obtain a target digital commodity.

According to the foregoing technical means, in the embodiment of the present application, a function model corresponding to each vehicle-mounted device is established based on an available function and communication mode of each vehicle-mounted device on a target vehicle, the vehicle-mounted device including a gateway device, a gateway sub device, and a direct connection device. An association relationship between the device models is determined based on an association relationship between the devices. A method routing table corresponding to available service on the target vehicle is generated. Based on a function requirement corresponding to a digital commodity to be created, a method routing table corresponding to available service corresponding to the function requirement is associated, so as to obtain a target digital commodity. Accordingly, if a new digital commodity needs to be created, a corresponding target digital commodity may be obtained only by associating a method routing table corresponding to available service corresponding to a corresponding function requirement. Repeated development of digital commodities is reduced, and development efficiency of digital commodities is improved.

Further, the associating, based on a function requirement corresponding to a digital commodity to be created, a method routing table corresponding to available service corresponding to the function requirement, to obtain a target digital commodity includes: allocating corresponding commodity identification information to the digital commodity to be created; and associating, based on the function requirement corresponding to the digital commodity to be created, the commodity identification information with the method routing table corresponding to the available service corresponding to the function requirement, and setting corresponding commodity attribute information, to obtain the target digital commodity.

According to the foregoing technical means, in the embodiment of the present application, fine management can be performed on each target digital commodity.

Further, after the associating, based on a function requirement corresponding to a digital commodity to be created, a method routing table corresponding to available service corresponding to the function requirement, to obtain a target digital commodity, the method further includes: setting the target digital commodity for sale so as to add the target digital commodity to a target platform for release; and displaying, in response to receiving a browsing request of a target terminal for a digital commodity in the target platform, a digital commodity list in a display interface of the target terminal, the digital commodity list including at least one target digital commodity.

According to the foregoing technical means, in the embodiment of the present application, a user can conveniently browse a target digital commodity.

Further, after the displaying, in response to receiving a browsing request of a target terminal for a digital commodity in the target platform, a digital commodity list in a display interface of the target terminal, the method further includes: displaying, in response to selection information of the target terminal for any target digital commodity in the digital commodity list, a detail page of the selected target digital commodity in the display interface of the target terminal; obtaining application version information of the target terminal in response to receiving a subscription request of the target terminal for the selected target digital commodity; and checking the application version information of the target terminal and applicable version information of the selected target digital commodity, and if checking succeeds, completing subscription of the selected target digital commodity, or if checking fails, displaying prompting information for prompting a version error in the display interface of the target terminal.

According to the foregoing technical means, version information can be compared to ensure normal use of a target digital commodity and improve user experience.

Further, after the completing subscription of the selected target digital commodity, the method further includes: generating order information to be activated corresponding to the target digital commodity that is subscribed to; sending, in response to receiving an activation request of the target terminal for the order information, an activation configuration code to the target terminal such that the target terminal activates the order information based on the activation configuration code; and if activation succeeds, synchronizing information of the successfully activated target digital commodity to a user right center, and generating a right validity period based on the order information.

According to the foregoing technical means, a target digital commodity is activated based on an activation configuration code, so that security in use of the target digital commodity can be ensured.

According to a second aspect, an embodiment of the present application provides an Internet of vehicles-based digital commodity processing method, applied to a target vehicle. The method includes the following steps: sending, to a cloud, a browsing request for a digital commodity in a target platform; and receiving and displaying a digital commodity list fed back by the cloud, the digital commodity list including at least one target digital commodity, and the target digital commodity being obtained by the Internet of vehicles-based digital commodity processing method according to the foregoing embodiment.

According to the foregoing technical means, in the embodiment of the present application, a function model corresponding to each vehicle-mounted device is established based on an available function and communication mode of each vehicle-mounted device on a target vehicle, the vehicle-mounted device including a gateway device, a gateway sub device, and a direct connection device. An association relationship between the device models is determined based on an association relationship between the devices. A method routing table corresponding to available service on the target vehicle is generated. Based on a function requirement corresponding to a digital commodity to be created, a method routing table corresponding to available service corresponding to the function requirement is associated, so as to obtain a target digital commodity. Accordingly, if a new digital commodity needs to be created, a corresponding target digital commodity may be obtained only by associating a method routing table corresponding to available service corresponding to a corresponding function requirement. Repeated development of digital commodities is reduced, and development efficiency of digital commodities is improved.

Further, the method further includes: sending, to the cloud in response to a selection operation for any target digital commodity in the digital commodity list, selection information for the target digital commodity; receiving and displaying a detail page, fed back by the cloud, of the selected target digital commodity; sending, in response to a subscription operation for the target digital commodity, a corresponding subscription request to the cloud such that the cloud checks application version information of the target vehicle and applicable version information of the target digital commodity to be subscribed to, and if checking succeeds, completes subscription, or if checking fails, generates prompting information for prompting a version error; receiving and displaying the prompting information that is fed back by the cloud and used for prompting the version error; sending, to the cloud in response to an upgrade operation for the prompting information, an upgrade request for the application version information such that the cloud feeds back a corresponding upgraded data packet based on the upgrade request; and receiving the upgraded data packet, and performing application upgrade based on the upgraded data packet, to complete subscription of the target digital commodity.

According to the foregoing technical means, version information can be compared to ensure normal use of a target digital commodity and improve user experience.

Further, after the completing subscription of the target digital commodity, the method further includes: receiving and displaying order information to be activated that is sent by the cloud and corresponds to the target digital commodity that is subscribed to; sending, to the cloud based on an activation operation for the order information, an activation request for the order information such that the cloud feeds back a corresponding activation configuration code based on the activation request; receiving the activation configuration code, and activating the order information based on the activation configuration code; and synchronizing information of the successfully activated target digital commodity to a user right center, and recording a right validity period in the user right center.

According to the foregoing technical means, a target digital commodity is activated based on an activation configuration code, so that security in use of the target digital commodity can be ensured.

According to a third aspect, an embodiment of the present application provides an Internet of vehicles-based digital commodity processing apparatus, applied to a cloud. The apparatus includes: a model establishment module, configured to establish a device model corresponding to each vehicle-mounted device based on an available function and communication mode of each vehicle-mounted device on a target vehicle, the vehicle-mounted devices including a gateway device, a gateway sub device, and a direct connection device; an association module, configured to determine an association relationship between the device models based on an association relationship between the gateway device, the gateway sub device, and the direct connection device; a route generation module, configured to generate a method routing table corresponding to available service on the target vehicle based on the association relationship between the device models; and a first processing module, configured to associate, based on a function requirement corresponding to a digital commodity to be created, a method routing table corresponding to available service corresponding to the function requirement, to obtain a target digital commodity.

Further, the first processing module is configured to: allocate corresponding commodity identification information to the digital commodity to be created; and associate, based on the function requirement corresponding to the digital commodity to be created, the commodity identification information with the method routing table corresponding to the available service corresponding to the function requirement, and set corresponding commodity attribute information, to obtain the target digital commodity.

Further, after associating, based on the function requirement corresponding to the digital commodity to be created, the method routing table corresponding to the available service corresponding to the function requirement, to obtain the target digital commodity, the first processing module is further configured to: set the target digital commodity for sale so as to add the target digital commodity to a target platform for release; and display, in response to receiving a browsing request of a target terminal for a digital commodity in the target platform, a digital commodity list in a display interface of the target terminal, the digital commodity list including at least one target digital commodity.

Further, after displaying, in response to receiving the browsing request of the target terminal for the digital commodity in the target platform, the digital commodity list in the display interface of the target terminal, the first processing module is further configured to: display, in response to selection information of the target terminal for any target digital commodity in the digital commodity list, a detail page of the selected target digital commodity in the display interface of the target terminal; obtain application version information of the target terminal in response to receiving a subscription request of the target terminal for the selected target digital commodity; and check the application version information of the target terminal and applicable version information of the selected target digital commodity, and if checking succeeds, complete subscription of the selected target digital commodity, or if checking fails, display prompting information for prompting a version error in the display interface of the target terminal.

Further, after completing subscription of the selected target digital commodity, the first processing module is further configured to: generate order information to be activated corresponding to the target digital commodity that is subscribed to; send, in response to receiving an activation request of the target terminal for the order information, an activation configuration code to the target terminal such that the target terminal activates the order information based on the activation configuration code; and if activation succeeds, synchronize information of the successfully activated target digital commodity to a user right center, and generate a right validity period based on the order information.

According to a fourth aspect, an embodiment of the present application provides an Internet of vehicles-based digital commodity processing apparatus, applied to a target vehicle. The apparatus includes: a sending module, configured to send, to a cloud, a browsing request for a digital commodity in a target platform; and a second processing module, configured to receive and display a digital commodity list fed back by the cloud, the digital commodity list including at least one target digital commodity, and the target digital commodity being obtained by the Internet of vehicles-based digital commodity processing method according to the foregoing embodiment.

Further, the second processing module is further configured to: send, to the cloud in response to a selection operation for any target digital commodity in the digital commodity list, selection information for the target digital commodity; receive and display a detail page, fed back by the cloud, of the selected target digital commodity; send, in response to a subscription operation for the target digital commodity, a corresponding subscription request to the cloud such that the cloud checks application version information of the target vehicle and applicable version information of the target digital commodity to be subscribed to, and if checking succeeds, completes subscription, or if checking fails, generates prompting information for prompting a version error; receive and display the prompting information that is fed back by the cloud and used for prompting the version error; send, to the cloud in response to an upgrade operation for the prompting information, an upgrade request for the application version information such that the cloud feeds back a corresponding upgraded data packet based on the upgrade request; and receive the upgraded data packet, and perform application upgrade based on the upgraded data packet, to complete subscription of the target digital commodity.

Further, after completing subscription of the target digital commodity, the second processing module is further configured to: receive and display order information to be activated that is sent by the cloud and corresponds to the target digital commodity that is subscribed to; send, to the cloud based on an activation operation for the order information, an activation request for the order information such that the cloud feeds back a corresponding activation configuration code based on the activation request; receive the activation configuration code, and activate the order information based on the activation configuration code; and synchronize information of the successfully activated target digital commodity to a user right center, and record a right validity period in the user right center.

According to a fifth aspect, an embodiment of the present application provides an electronic device, including a memory, a processor, and a computer program stored in the memory and capable of running in the processor. The processor executes the program to implement the Internet of vehicles-based digital commodity processing method as described in the foregoing embodiment.

According to a sixth aspect, an embodiment of the present application provides a computer-readable storage medium, storing computer instructions that are used for enabling a computer to perform the Internet of vehicles-based digital commodity processing method as described in the foregoing embodiment.

According to the embodiments of the present application, a function model corresponding to each vehicle-mounted device is established based on an available function and communication mode of each vehicle-mounted device on a target vehicle, the vehicle-mounted device including a gateway device, a gateway sub device, and a direct connection device. An association relationship between the device models is determined based on an association relationship between the devices. A method routing table corresponding to available service on the target vehicle is generated. Based on a function requirement corresponding to a digital commodity to be created, a method routing table corresponding to available service corresponding to the function requirement is associated, so as to obtain a target digital commodity. Accordingly, if a new digital commodity needs to be created, a corresponding target digital commodity may be obtained only by associating a method routing table corresponding to available service corresponding to a corresponding function requirement. Repeated development of digital commodities is reduced, and development efficiency of digital commodities is improved.

Additional aspects and advantages of the present application will be partially presented in the following descriptions and partially become apparent from the following descriptions or get understood by implementing the present application.

### Brief Description of the Drawings

The above-mentioned and/or additional aspects and advantages of the present application will become apparent and easy to understand from the descriptions made to the embodiments below in combination with the drawings.
Fig. 1 is a schematic flowchart of an Internet of vehicles-based digital commodity processing method according to an embodiment of the present application;
Fig. 2 is a schematic diagram of a correspondence between a cloud virtual gateway and a device model according to an embodiment of the present application;
Fig. 3 is a schematic structural diagram of a device model topology in a cloud virtual gateway according to an embodiment of the present application;
Fig. 4 is a schematic diagram of a method routing table according to an embodiment of the present application;
Fig. 5 is a schematic diagram of a conceptual relation between an application, a digital product, and a digital commodity according to an embodiment of the present application;
Fig. 6 is a schematic diagram of a conceptual relation between a user, an order, and rights according to an embodiment of the present application;
Fig. 7 is a schematic flowchart of an Internet of vehicles-based digital commodity processing method according to an embodiment of the present application;
Fig. 8 is a schematic flowchart of subscribing to a digital commodity in an Internet of vehicles-based digital commodity processing method according to an embodiment of the present application;
Fig. 9 is a schematic block diagram of an Internet of vehicles-based digital commodity processing apparatus according to an embodiment of the present application; and
Fig. 10 is an example diagram of an electronic device according to an embodiment of the present application.

### Detailed Description of the Embodiments

The embodiments of the present application will be described below in detail. Examples of the embodiments are illustrated in the drawings, in which the same or similar reference signs always represent the same or similar components or components with the same or similar functions. The embodiments described below with reference to the drawings are exemplary and intended to explain the present application, and cannot be understood as limitations on the present application.

An Internet of vehicles-based digital commodity processing method and apparatus, device, and medium of the embodiments of the present application will be described below with reference to the drawings. For the problem of relatively high development cost caused by a high repeated development rate of digital commodity, mentioned in Background of the Invention, the present application provides an Internet of vehicles-based digital commodity processing method. In this method, a function model corresponding to each vehicle-mounted device is established based on an available function and communication mode of each vehicle-mounted device on a target vehicle, the vehicle-mounted device including a gateway device, a gateway sub device, and a direct connection device. An association relationship between the device models is determined based on an association relationship between the devices. A method routing table corresponding to available service on the target vehicle is generated. Based on a function requirement corresponding to a digital commodity to be created, a method routing table corresponding to available service corresponding to the function requirement is associated, so as to obtain a target digital commodity. Accordingly, if a new digital commodity needs to be created, a corresponding target digital commodity may be obtained only by associating a method routing table corresponding to available service corresponding to a corresponding function requirement. Repeated development of digital commodities is reduced, and development efficiency of digital commodities is improved.

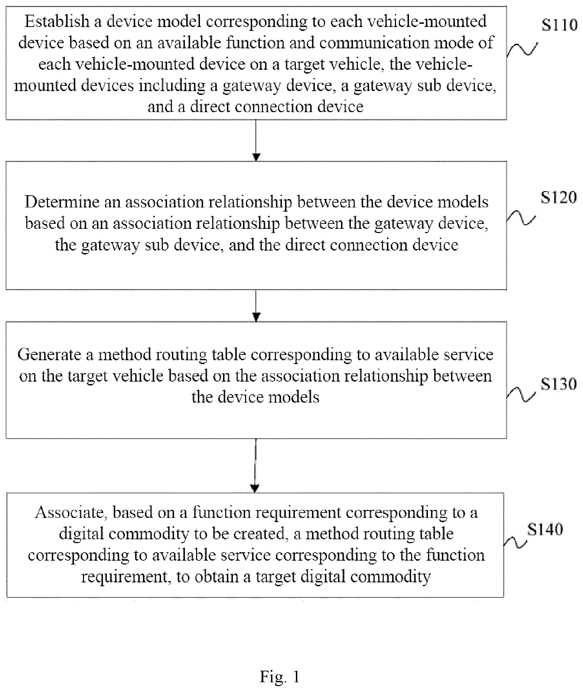

Specifically, Fig. 1 is a schematic flowchart of an Internet of vehicles-based digital commodity processing method according to an embodiment of the present application.

The method may be applied to a cloud. As shown in Fig. 1, the Internet of vehicles-based digital commodity processing method includes the following steps.

In step S 110, a device model corresponding to each vehicle-mounted device is established based on an available function and communication mode of each vehicle-mounted device on a target vehicle, the vehicle-mounted devices including a gateway device, a gateway sub device, and a direct connection device.

In this embodiment, the target vehicle may be any vehicle capable of accessing the Internet of vehicles, which may be a single vehicle, or all vehicles corresponding to a specific vehicle type, etc. A server may establish the device model corresponding to each vehicle-mounted device based on the available function and communication mode of each vehicle-mounted device on the target vehicle. Specifically, the device model may include a method model and a connection model. The method model includes a parameter, event, and behavior supported by the device, and actually defines a capability that the device may provide, as well as a mode (uplink and downlink), data, and data format for interaction with the cloud. For a specific behavior, whether to wake up the vehicle-mounted device when a behavioral instruction is issued and whether to cache the behavioral instruction if the vehicle-mounted device is not to be woken up may be defined.

The connection model includes a mode for communication between the device and the cloud, a cluster involved in communication, and a channel for interaction with the cloud by each method. In an example, a data interaction protocol used in a definition for a remote control function is Message Queuing Telemetry Transport (MQTT). MQTT defines topic in the connection model, and a specific behavior and event in the device model need to be associated with topic.

In an embodiment, considering intelligent devices on a vehicle actually have different responsibilities, the vehicle usually communicates with a Telematics Service Provider (TSP) through an Internet of vehicles function using T-box as an in-vehicle gateway, and interaction between another controller or component and the cloud requires the T-box as a proxy or converter. The vehicle-mounted device may be divided into a direct connection device, a gateway device, and a gateway sub device in terms of a network connection type of the device. The direct connection device has an independent network connection capability, may be directly connected to an Internet of vehicles platform, and may not mount any sub device. The gateway device may manage the sub device and keep a topological relationship with the sub device. The gateway sub device is connected to the TSP not directly but with the gateway as a proxy. Therefore, dividing the vehicle-mounted devices into different types can truly reproduce functions and effects of the vehicle-mounted devices on the vehicle, which achieves higher flexibility in power management, remote wakeup, and the like of the vehicle.

A digital commodity developer (hereinafter referred to as a developer) can upload available function information and communication mode of each vehicle-mounted device on the target vehicle to the server. Then, the server may correspondingly establish the device model corresponding to each vehicle-mounted device. The device model may include code descriptions of the function information and communication mode of the vehicle-mounted device.

In step S120, an association relationship between the device models is determined based on an association relationship between the gateway device, the gateway sub device, and the direct connection device.

In step S130, a method routing table corresponding to available service on the target vehicle is generated based on the association relationship between the device models.

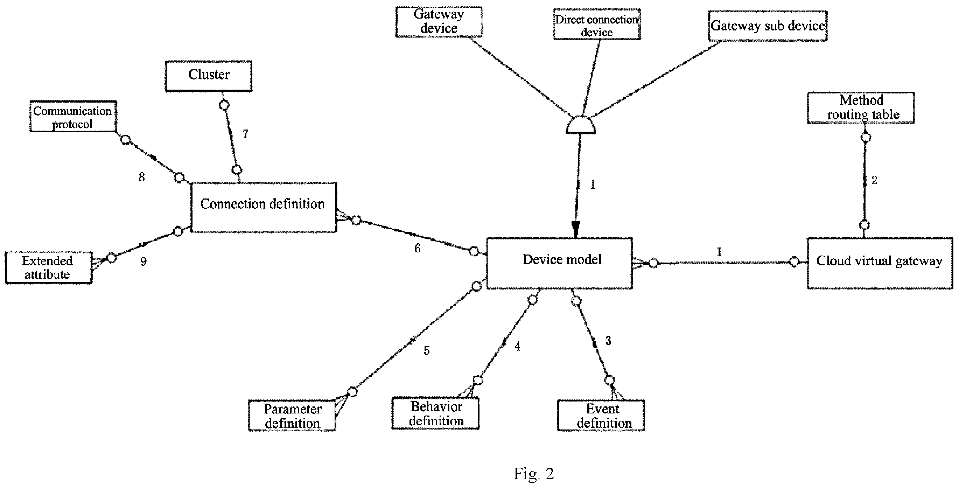

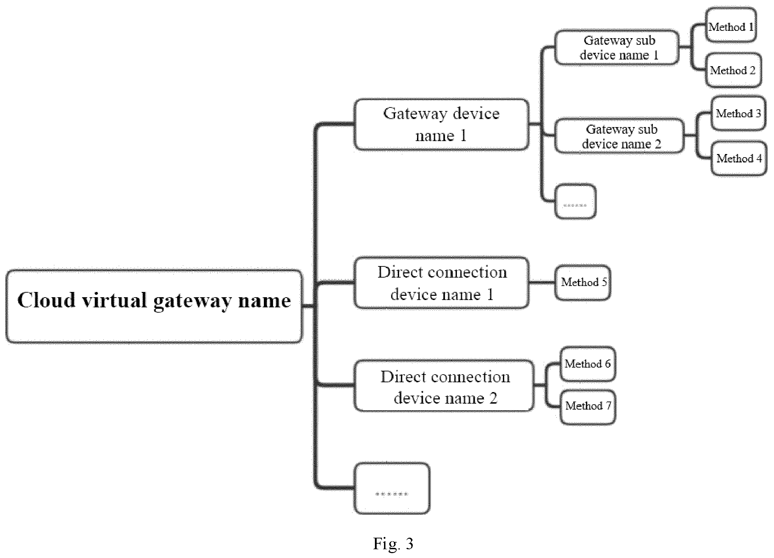

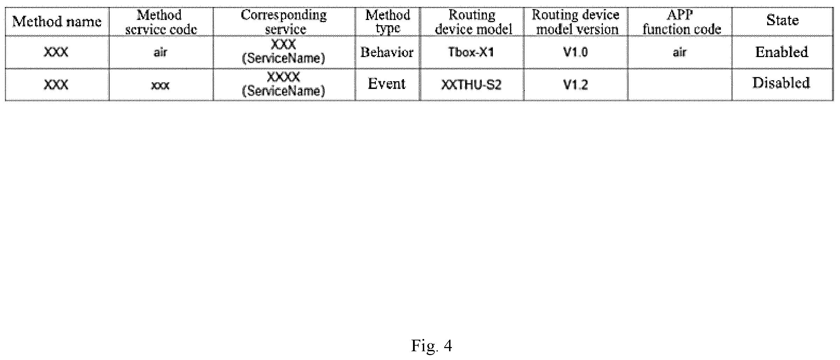

In this embodiment, the association relationship between the device models determines routes for instruction issuing and event reporting. A cloud virtual gateway may be constructed in the Internet of vehicles platform to manage the association relationship between the device models (referring to Fig. 2) and provide capabilities of these device models in a unified manner for the target vehicle. Specifically, the cloud virtual gateway mainly manages two parts of content.
1) Device model topology: a device model of a gateway type is selected, and a device model of one or each of more gateway sub devices is selected for the device model. Alternatively, a device model of a direct connection device is directly selected. The foregoing operations are repeated, so as to construct a complete device model topology (as shown in Fig. 3).
2) Method routing table: for a cloud virtual gateway, service of all device models under the cloud virtual gateway is service of the cloud virtual gateway, and all events and behaviors under the service are methods of the cloud virtual gateway. A method routing table of all the methods may be automatically generated through the device model topology. Each uplink/downlink event and behavior may be routed as required by enabling, disabling, or configuration of a responding rule on the method routing table (as shown in Fig. 4).

The cloud virtual gateway may be published after being defined. The published cloud virtual gateway may be associated with the target vehicle for the target vehicle to invoke.

In step S140, based on a function requirement corresponding to a digital commodity to be created, a method routing table corresponding to available service corresponding to the function requirement is associated, to obtain a target digital commodity.

In this embodiment, the server may associate, based on the function requirement corresponding to the digital commodity to be created, the method routing table corresponding to the available service capable of meeting the function requirement, so as to obtain the target digital commodity. Accordingly, different method routing tables may be associated for different function requirements to obtain corresponding digital commodities. Repeated development is avoided, and development efficiency of digital commodities is further improved.

In an embodiment of the present application, the step that, based on a function requirement corresponding to a digital commodity to be created, a method routing table corresponding to available service corresponding to the function requirement is associated, to obtain a target digital commodity includes the following steps:
corresponding commodity identification information is allocated to the digital commodity to be created; and
the commodity identification information is associated with the method routing table corresponding to the available service corresponding to the function requirement based on the function requirement corresponding to the digital commodity to be created, and corresponding commodity attribute information is set, to obtain the target digital commodity.

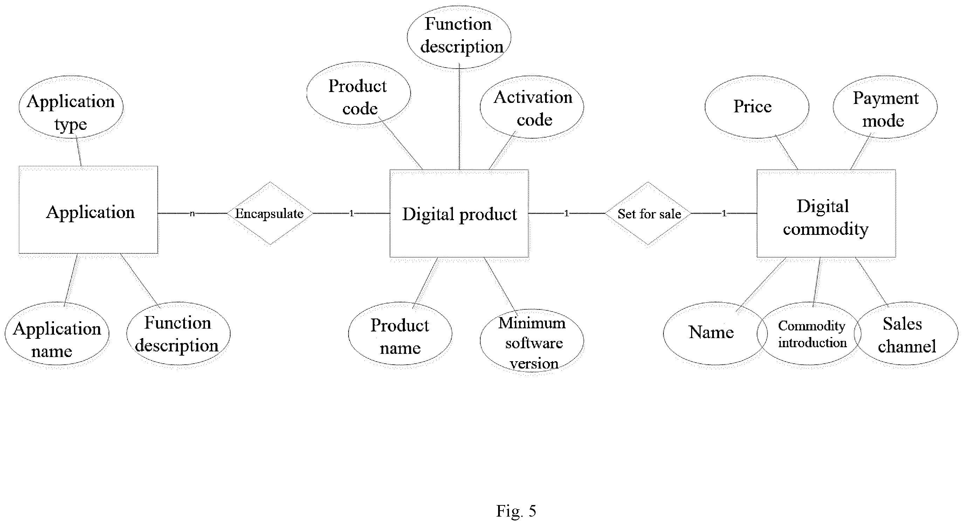

In this embodiment, referring to Fig. 5, for an automobile enterprise, different mobile APPs may be provided for vehicle owners according to vehicle series, vehicle types, or sub-brands, and thus management is performed for different application requirements. Content of an application may include a host address, a downloading link, a two-dimensional code, etc. The application may manage a series of functions, and perform type definition and tagging for the functions. The functions in the application are managed in a tree structure, and a core field is a function code. When targeted management is performed on the applications, rights to use and see the applications may be divided according to the sub-brands of the automobile enterprise, or application sets may be constructed for classification management.

Based on the above, to implement digital commoditization of a function, a process of encapsulating the function into a digital product is required to be completed. Therefore, it is necessary to first associate a function in the application with a method provided by the cloud virtual gateway and then associate the digital product with the function in the application. This process may be performed in a digital product center. In an example, a new digital product is created in the digital product center, a digital product code is automatically generated, and a corresponding function description, activation code, product name, minimum software version, and the like are determined. Then, an application is selected for the digital product, and a function to be encapsulated into a product is confirmed by ticking. The function is an actual element displayed on the mobile APP. Then, the selected function is associated with a method (i.e., the method routing table) in the cloud virtual gateway. One function may be associated with one or more methods. Therefore, the digital product may obtain a function group and a method list actually to be implemented.

In this embodiment, after the digital product is created, the digital product is further required to be associated with a digital commodity. Association may be performed in a digital commodity center. Specifically, a digital commodity is created in the digital commodity center, a digital product is selected for association, and then commodity identification information corresponding to the digital commodity is determined. For example, a digital product code may be used as the corresponding commodity identification information. Corresponding commodity attribute information is configured for the digital commodity. For example, a payment mode and a pricing policy may be set for the digital commodity, and one or more application ranges are selected. A body of the selected range may be a vehicle type, vehicle series, or vehicles of single users. In an example, the commodity attribute information may be configured by ticking. The name, commodity introduction, sales channel, and the like of the digital commodity may further be configured. After configuration is completed, a target digital commodity may be obtained.

Based on the foregoing embodiments, in an embodiment of the present application, after the step that, based on a function requirement corresponding to a digital commodity to be created, a method routing table corresponding to available service corresponding to the function requirement is associated, to obtain a target digital commodity, the method further includes the following steps:
the target digital commodity is set for sale so as to add the target digital commodity to a target platform for release; and
in response to receiving a browsing request of a target terminal for a digital commodity in the target platform, a digital commodity list is displayed in a display interface of the target terminal, the digital commodity list including at least one target digital commodity.

In this embodiment, the target digital commodity may be set for sale or not for sale. When being set for sale, the target digital commodity may be added to the target platform for release. The target platform may be an Internet of vehicles-based store, etc. Based on a set application range of the target digital commodity, a user in the application range may log on to the target platform for browsing. Specifically, in response to receiving the browsing request of the target terminal for the digital commodity in the target platform, the digital commodity list may be displayed in the display interface of the target terminal. The digital commodity list may include at least one available target digital commodity. It is to be noted that the target terminal may be a handheld device, or may be a vehicle-mounted device arranged on the vehicle, such as a vehicle-mounted computer.

In an embodiment of the present application, after the step that, in response to receiving a browsing request of a target terminal for a digital commodity in the target platform, a digital commodity list is displayed in a display interface of the target terminal, the method further includes the following steps:
in response to selection information of the target terminal for any target digital commodity in the digital commodity list, a detail page of the selected target digital commodity is displayed in the display interface of the target terminal;
application version information of the target terminal is obtained in response to receiving a subscription request of the target terminal for the selected target digital commodity; and
the application version information of the target terminal is checked with applicable version information of the selected target digital commodity, and if checking succeeds, subscription of the selected target digital commodity is completed, or if checking fails, prompting information for prompting a version error is displayed in the display interface of the target terminal.

In this embodiment, the user, when browsing the target digital commodity, may click the target digital commodity to send the selection information for the target digital commodity through the target terminal. The server, after receiving the selection information, may display the detail page of the target digital commodity selected by the user in the display interface of the target terminal. The detail page may include related information of the target digital commodity such that the user knows about the function, price, etc., of the target digital commodity.

When determining that subscription is needed, the user may click a specific region in the detail page, such as a "subscribe" button, to send a subscription request for the selected target digital commodity through the target terminal. After receiving the subscription request, the server may obtain the application version information of the target terminal based on the Internet of vehicles, i.e., version information of an APP on the target terminal or version information of a controller on the vehicle-mounted computer. The server may check the application version information with the applicable version information of the selected target digital commodity, and if checking succeeds, completes subscription of the selected target digital commodity, or if checking fails, displays the prompting information for prompting the version error in the display interface of the target terminal, such that the user performs version upgrade based on the prompting information. The server may push a corresponding upgraded data packet (such as an Over The Air (OTA) upgrade package) to the target terminal or the vehicle. Subscription may be continued only after upgrade is completed.

Therefore, the application version information may be checked to ensure a correct usage environment of the digital commodity and further ensure user experience of the digital commodity.

In an embodiment of the present application, after the step that subscription of the selected target digital commodity is completed, the method further includes the following steps:
order information to be activated corresponding to the target digital commodity that is subscribed to is generated;
in response to receiving an activation request of the target terminal for the order information, an activation configuration code is sent to the target terminal such that the target terminal activates the order information based on the activation configuration code; and
if activation succeeds, information of the successfully activated target digital commodity is synchronized to a user right center, and a right validity period is generated based on the order information.

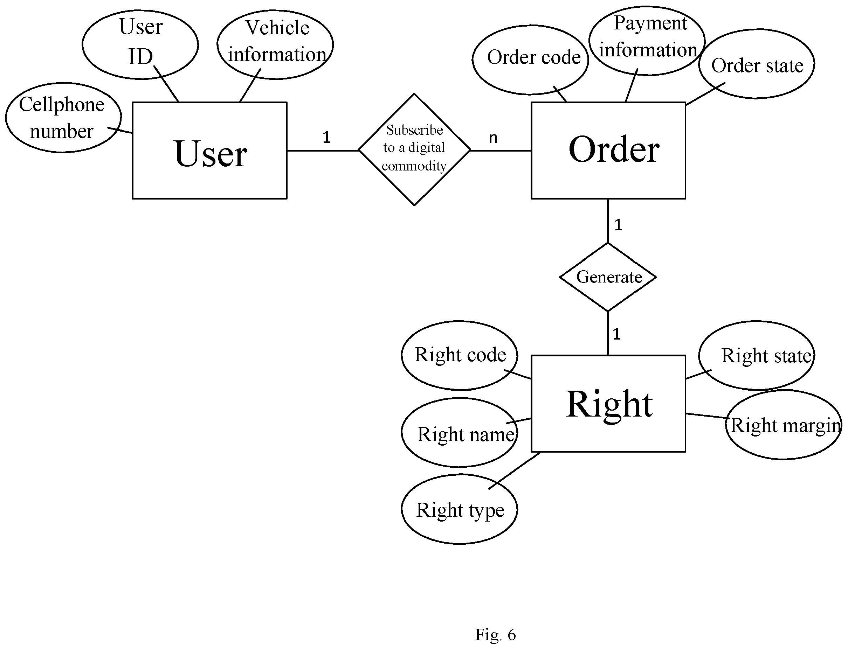

In this embodiment, referring to Fig. 6, after the user completes payment, a piece of order information to be activated corresponding to the target digital commodity that is subscribed to is generated for an account of the user. The user may click an activate button in the order information to generate and send an activation request for the order information. If receiving the activation request, the server may issue an activation configuration code to the vehicle. After completing flashing, the vehicle may display "flashing succeeds" in the display interface of the vehicle, and if flashing does not succeed, makes a prompt "flashing fails, please try again later". In an example, the application version information may be checked again before activation to ensure the correct usage environment of the digital commodity.

At this point, after the order information is successfully activated, the digital product center may synchronize information to a user right center, and generate a right validity period based on the order information. Therefore, a time limit of using the target digital commodity may be managed based on the right validity period.

The user may query a right that the user has from the system. It is to be noted that different right effectuation mechanisms may be used for different digital commodities. Because different activation modes are used for different digital commodities: some digital commodities may be used only after being activated at the vehicle, but some digital commodities may be used immediately after being purchased, right effectuation time is different.

The vehicle may periodically determine validity of the right based on right information of the cloud. If the right is invalid, this function is disabled. If the right is valid, the right may be enjoyed normally. It is to be noted that the validity may not be checked timely under a poor network condition, and in this case, the available state of the digital commodity at the vehicle remains unchanged.

In an embodiment, a front end of the APP obtains a function list again every time when the APP is opened, and different function cards may be displayed for different functions. A user right, i.e., an activated digital commodity list, is obtained through the right center. The digital commodity list is converted into a corresponding digital product list. Then, the digital product list is converted into an application function list. When the APP obtains the application function list, a corresponding paid function list and general function list in the right are integrated. Finally, the functions are displayed according to an integrated function list.

An embodiment of the present application also provides an Internet of vehicles-based digital commodity processing method, applied to a target vehicle. The method includes the following steps:
a browsing request for a digital commodity in a target platform is sent to a cloud; and
a digital commodity list fed back by the cloud is received and displayed, the digital commodity list including at least one target digital commodity, and the target digital commodity being obtained by the Internet of vehicles-based digital commodity processing method applied to the cloud in the foregoing embodiment.

Accordingly, the target digital commodity is obtained by the Internet of vehicles-based digital commodity processing method applied to the cloud. Repeated development of digital commodities can be reduced, and Internet of vehicles-based development efficiency of digital commodities can be improved.

Based on the foregoing embodiment, in an embodiment of the application, the method further includes the following steps:
in response to a selection operation for any target digital commodity in the digital commodity list, selection information for the target digital commodity is sent to the cloud;
a detail page, fed back by the cloud, of the selected target digital commodity is received and displayed;
in response to a subscription operation for the target digital commodity, a corresponding subscription request is sent to the cloud such that the cloud checks application version information of the target vehicle and applicable version information of the target digital commodity to be subscribed to, and if checking succeeds, completes subscription, or if checking fails, generates prompting information for prompting a version error;
the prompting information that is fed back by the cloud and used for prompting the version error is received and displayed;
in response to an upgrade operation for the prompting information, an upgrade request for the application version information is sent to the cloud such that the cloud feeds back a corresponding upgraded data packet based on the upgrade request; and
the upgraded data packet is received, and application upgrade is performed based on the upgraded data packet, to complete subscription of the target digital commodity.

In this embodiment, a user, when browsing the target digital commodity, may click the target digital commodity to send the selection information for the target digital commodity through the target terminal on the target vehicle. A server, after receiving the selection information, may display the detail page of the target digital commodity selected by the user in a display interface of the target terminal. The detail page may include related information of the target digital commodity such that the user knows about a function, price, etc., of the target digital commodity.

When determining that subscription is needed, the user may click a specific region in the detail page (i.e., the subscription operation), such as a "subscribe" button, to send the subscription request for the selected target digital commodity through the target terminal. After receiving the subscription request, the server may obtain application version information of the target terminal based on the Internet of vehicles, i.e., version information of an APP on the target terminal or version information of a controller on a vehicle-mounted computer. The server may check the application version information with applicable version information of the selected target digital commodity, and if checking succeeds, completes subscription of the selected target digital commodity, or if checking fails, displays the prompting information for prompting the version error in the display interface of the target terminal, such that the user performs version upgrade based on the prompting information. The server may push the corresponding upgraded data packet (such as an OTA upgrade package) to the target terminal or the vehicle. Subscription may be continued only after upgrade is completed.

Based on the foregoing embodiments, in an embodiment of the present application, after the step that subscription of the target digital commodity is completed, the method further includes the following steps:
order information to be activated that is sent by the cloud and corresponds to the target digital commodity that is subscribed to is received and displayed;
an activation request for the order information is sent to the cloud based on an activation operation for the order information such that the cloud feeds back a corresponding activation configuration code based on the activation request;
the activation configuration code is received, and the order information is activated based on the activation configuration code; and
information of the successfully activated target digital commodity is synchronized to a user right center, and a right validity period is recorded in the user right center.

In this embodiment, after the user completes payment, the cloud may generate a piece of order information to be activated corresponding to the target digital commodity that is subscribed to for an account of the user, and send the order information to the target vehicle. The target vehicle may display the order information in the target terminal. The user may click an activate button in the order information (i.e., the activation operation) to generate and send an activation request for the order information. If receiving the activation request, the server may issue an activation configuration code to the vehicle. After completing flashing, the vehicle may display "flashing succeeds" in the display interface of the vehicle, and if flashing does not succeed, makes a prompt "flashing fails, please try again later". In an example, the application version information may be checked again before activation to ensure a correct usage environment of the digital commodity.

At this point, after the order information is successfully activated, information is synchronized to a user right center, and a right validity period is generated based on the order information. Therefore, a time limit of using the target digital commodity may be managed based on the right validity period.

The user may query a right that the user has from the user right center. It is to be noted that different right effectuation mechanisms may be used for different digital commodities. Because different activation modes are used for different digital commodities: some digital commodities may be used only after being activated at the vehicle, but some digital commodities may be used immediately after being purchased, right effectuation time is different.

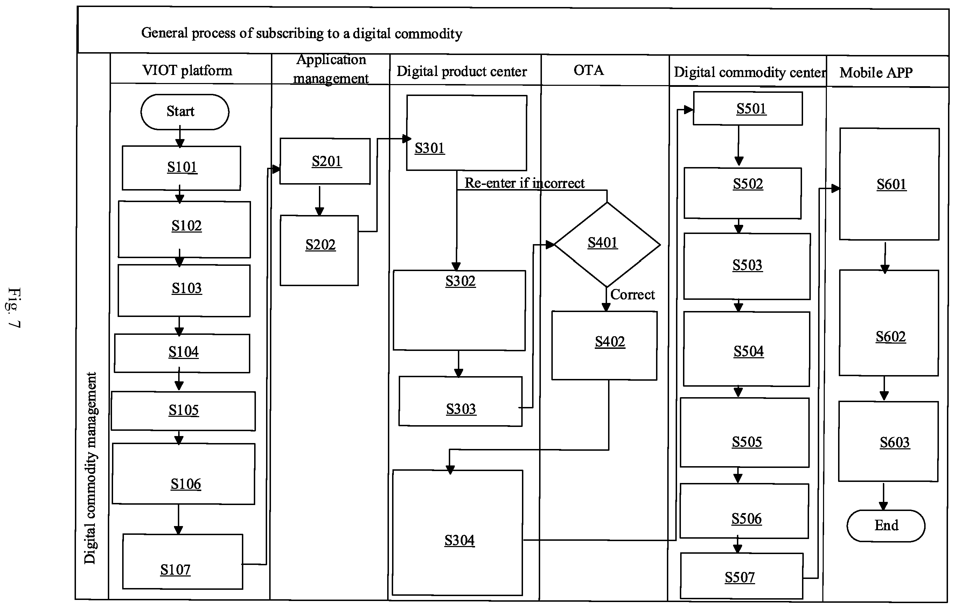

Referring to Fig. 7, Fig. 7 is a schematic flowchart of an Internet of vehicles-based digital commodity processing method according to an embodiment of the present application. A general process of subscribing to a digital commodity and digital commodity management are shown in Fig. 7.

A VIOT platform is mainly responsible for performing unified modeling vehicle devices, defining capabilities and vehicle-cloud communication modes of device models, and establishing an association relationship between the device models.

Digital commodity management in the VIOT platform include the process:
S101: creating device models;
S102: defining a service model of the device model;
S103: define a connection model of the device model;
S104: publishing the device model;
S 105: creating a cloud virtual gateway;
S106: the cloud virtual gateway associating the device models to establish an association relationship between the device models;
S 107: creating a cloud virtual gateway.

An application management platform is mainly configured to create an application and create a function tree in the application.

Digital commodity managements in the application management platform include the process:
S201: creating an application after S107;
S202: creating an application function, and go to S301.

A digital product center is mainly responsible for combining and encapsulating the application into a digital product, establishing an association relationship between the application and the digital product, and managing a device software version required by carrying the digital product on a vehicle type, and is also a system for implement product activation after a digital commodity is purchased.

Digital commodity managements in the digital product center include the process:
S301: creating a digital product, and associating at least one application, and go to S401;
S302: filling in a product name, a product function description, and an activation configuration code; if incorrect, re-entering and skipping to S401;
S303: filling in or select required minimum version information; and skip to S401.

After S402 checking succeeds, performing this process S304: clicking to confirm that creation of the digital product is completed, and automatically generating, by the system, a product code. After S304, S501 is performed in digital commodity center.

An OTA system is mainly responsible for software version management and software update of each controller of the vehicle.

Digital commodity managements in the OTA system include the process:
S401: checking version information; checking whether the created digital product version is consistent with the version in OTA, if no, go to S302, if yes, go to S402.

When creating a digital product in digital product center, each product needs to fill in lowest OTA software version requirement information. When the information is filled in, the information is compared with the version information of an actual OTA software package in an OTA system, this is the procedure S401 checking version information. If the filled information is not matched with the version information in the OTA system correctly, the version information is prompted to be wrong, the digital products cannot be established, and the digital products can be established successfully if the comparison is correct.

S402: returning that checking succeeds and skipping to S304.

A digital commodity center mainly has functions of managing whether the digital commodity is for sale or not for sale and managing a subscription order of the digital commodity.

Digital commodity managements in the digital commodity center include the process:
S501: creating a digital commodity;
S502: filling in commodity information, a commodity name, and a commodity introduction;
S503: configuring a sales channel of the commodity: the APP, an 4S store, or the like;
S504: configuring a payment mode and price of the commodity, such as periodic subscription payment;
S505: configuring an application range of the commodity (vehicle type, vehicle series, and the like);
S506: clicking to confirm that creation of the digital commodity is completed;
S507: setting the digital commodity for sale and not for sale. Then S601 is performed.

A right center is mainly responsible for managing a user right after the digital commodity is successfully purchased, including generation and update of the right and management of a right validity period.

Digital commodity managements in the right center include the process:
S601: the user logging on to the digital store with an Internet of vehicles account;
S602: obtaining a commodity list based on account information;
S603: display commodities in a front-end page.

Based on the embodiment shown in Fig. 7, repeated development of digital commodities can be reduced, and development efficiency of digital commodities is improved.

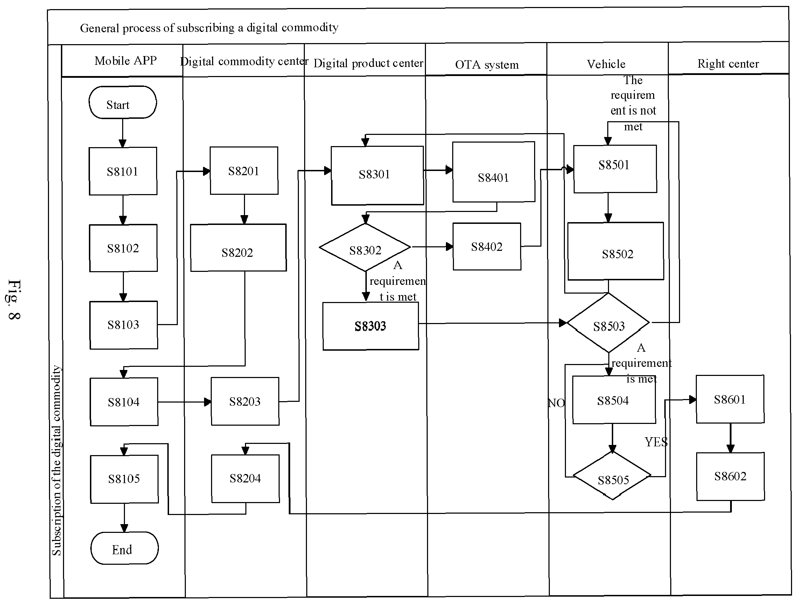

Referring to Fig. 8, Fig. 8 is a schematic flowchart of subscribing to a digital commodity in an Internet of vehicles-based digital commodity processing method according to an embodiment of the present application. Based on the embodiment shown in Fig. 8, subscription of the digital commodity can be managed effectively. Application version information is checked to ensure a correct usage environment of the digital commodity. An activation code is set, so that security in use of the digital commodity can be ensured.

An Internet of vehicles-based digital commodity processing apparatus proposed according to an embodiment of the present application will then be described with reference to the drawings.

A general process of subscribing to a digital commodity and subscription of the digital commodity are shown in Fig. 8.

Subscription of the digital commodity in mobile APP include the process:
Start;
S8101: a user logs on with an account;
S8102: browse a digital store;
S8103: subscribe a digital commodity; and go to S8201;
S8104: complete payment; and go to S8203;
S8105: prompt that activation is completed; and
end.

Subscription of the digital commodity in digital commodity center include the process:
S8201: generate a subscription order;
S8202: generate payment information based on commodity information; and go to S8104
S8203: generate an activated work order; and go to S8301;
S8204: complete the work order; and go to S8105.

Subscription of the digital commodity in digital product center include the process:
S8301: initiate a request to obtain a software version of a controller of the vehicle; and go to S8401;
S8302: compare version information; if a requirement is met, go to S8303, otherwise, go to S8402;
S8303: issue an activation code for product activation; and go to S8503.

Subscription of the digital commodity in OTA system include the process:
S8401: return latest software version information of the controller of the vehicle; and go to S8302;
S8402: push software of a required version; and go to S8501.

Subscription of the digital commodity in vehicle include the process:
S8501: check an upgrade, and install the software of the required version;
S8502: prompt that upgrade succeeds, and perform, by the user, activation again;
S8503: compare version information; if a requirement is met, go to S8504, otherwise go to S8501;
S8504: flash an activation configuration code;
S8505: whether flashing succeeds; if yes, go to S8601, otherwise, go to S8504.

Subscription of the digital commodity in right center include the process:
S8601: create right information;
S8602: return the right information; and go to S8204.

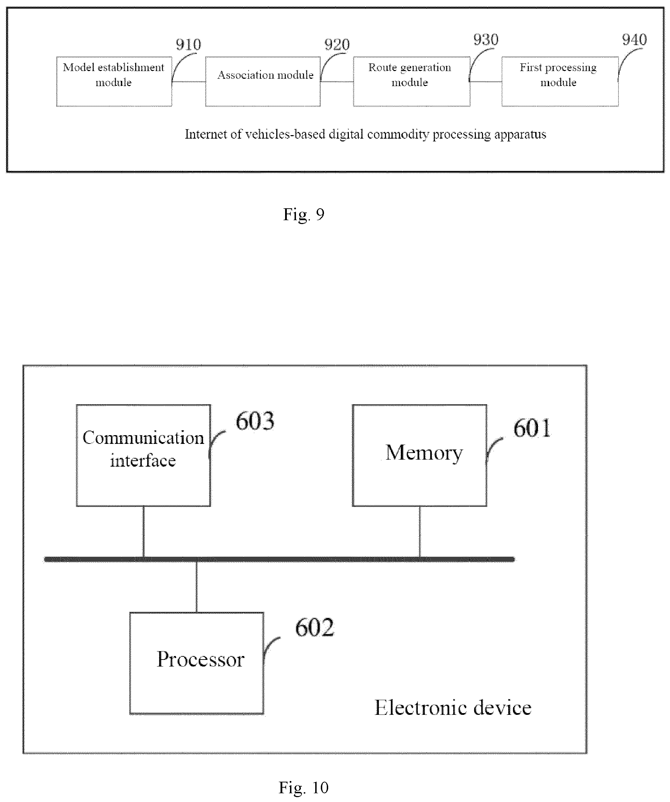

Fig. 9 is a schematic block diagram of an Internet of vehicles-based digital commodity processing apparatus according to an embodiment of the present application.

As shown in Fig. 9, the Internet of vehicles-based digital commodity processing apparatus is applied to a cloud. The apparatus includes:
a model establishment module 910, configured to establish a device model corresponding to each vehicle-mounted device based on an available function and communication mode of each vehicle-mounted device on a target vehicle, the vehicle-mounted devices including a gateway device, a gateway sub device, and a direct connection device;
an association module 920, configured to determine an association relationship between the device models based on an association relationship between the gateway device, the gateway sub device, and the direct connection device;
a route generation module 930, configured to generate a method routing table corresponding to available service on the target vehicle based on the association relationship between the device models; and
a first processing module 940, configured to associate, based on a function requirement corresponding to a digital commodity to be created, a method routing table corresponding to available service corresponding to the function requirement, to obtain a target digital commodity.

Further, the first processing module 940 is configured to: allocate corresponding commodity identification information to the digital commodity to be created; and associate, based on the function requirement corresponding to the digital commodity to be created, the commodity identification information with the method routing table corresponding to the available service corresponding to the function requirement, and set corresponding commodity attribute information, to obtain the target digital commodity.

Further, after associating, based on the function requirement corresponding to the digital commodity to be created, the method routing table corresponding to the available service corresponding to the function requirement, to obtain the target digital commodity, the first processing module 940 is further configured to: set the target digital commodity for sale so as to add the target digital commodity to a target platform for release; and display, in response to receiving a browsing request of a target terminal for a digital commodity in the target platform, a digital commodity list in a display interface of the target terminal, the digital commodity list including at least one target digital commodity.

Further, after displaying, in response to receiving the browsing request of the target terminal for the digital commodity in the target platform, the digital commodity list in the display interface of the target terminal, the first processing module 940 is further configured to: display, in response to selection information of the target terminal for any target digital commodity in the digital commodity list, a detail page of the selected target digital commodity in the display interface of the target terminal; obtain application version information of the target terminal in response to receiving a subscription request of the target terminal for the selected target digital commodity; and check the application version information of the target terminal and applicable version information of the selected target digital commodity, and if checking succeeds, complete subscription of the selected target digital commodity, or if checking fails, display prompting information for prompting a version error in the display interface of the target terminal.

Further, after completing subscription of the selected target digital commodity, the first processing module 940 is further configured to: generate order information to be activated corresponding to the target digital commodity that is subscribed to; send, in response to receiving an activation request of the target terminal for the order information, an activation configuration code to the target terminal such that the target terminal activates the order information based on the activation configuration code; and if activation succeeds, synchronize information of the successfully activated target digital commodity to a user right center, and generate a right validity period based on the order information.

An embodiment of the present application also provides an Internet of vehicles-based digital commodity processing apparatus, applied to a target vehicle. The apparatus includes:
a sending module, configured to send, to a cloud, a browsing request for a digital commodity in a target platform; and
a second processing module, configured to receive and display a digital commodity list fed back by the cloud, the digital commodity list including at least one target digital commodity, and the target digital commodity being obtained by the Internet of vehicles-based digital commodity processing method applied to the cloud in the foregoing embodiment.

Further, the second processing module is further configured to: send, to the cloud in response to a selection operation for any target digital commodity in the digital commodity list, selection information for the target digital commodity; receive and display a detail page, fed back by the cloud, of the selected target digital commodity; send, in response to a subscription operation for the target digital commodity, a corresponding subscription request to the cloud such that the cloud checks application version information of the target vehicle and applicable version information of the target digital commodity to be subscribed to, and if checking succeeds, completes subscription, or if checking fails, generates prompting information for prompting a version error; receive and display the prompting information that is fed back by the cloud and used for prompting the version error; send, to the cloud in response to an upgrade operation for the prompting information, an upgrade request for the application version information such that the cloud feeds back a corresponding upgraded data packet based on the upgrade request; and receive the upgraded data packet, and perform application upgrade based on the upgraded data packet, to complete subscription of the target digital commodity.

Further, after completing subscription of the target digital commodity, the second processing module is further configured to: receive and display order information to be activated that is sent by the cloud and corresponds to the target digital commodity that is subscribed to; send, to the cloud based on an activation operation for the order information, an activation request for the order information such that the cloud feeds back a corresponding activation configuration code based on the activation request; receive the activation configuration code, and activate the order information based on the activation configuration code; and synchronize information of the successfully activated target digital commodity to a user right center, and record a right validity period in the user right center.

It is to be noted that the explanations and descriptions about the embodiment of the Internet of vehicles-based digital commodity processing method are also suitable for the Internet of vehicles-based digital commodity processing apparatus, and will not be elaborated herein.

According to the Internet of vehicles-based digital commodity processing apparatus proposed in the embodiment of the present application, a function model corresponding to each vehicle-mounted device is established based on an available function and communication mode of each vehicle-mounted device on a target vehicle, the vehicle-mounted device including a gateway device, a gateway sub device, and a direct connection device. An association relationship between the device models is determined based on an association relationship between the devices. A method routing table corresponding to available service on the target vehicle is generated. Based on a function requirement corresponding to a digital commodity to be created, a method routing table corresponding to available service corresponding to the function requirement is associated, so as to obtain a target digital commodity. Accordingly, if a new digital commodity needs to be created, a corresponding target digital commodity may be obtained only by associating a method routing table corresponding to available service corresponding to a corresponding function requirement. Repeated development of digital commodities is reduced, and development efficiency of digital commodities is improved.

FIG. 10 is a schematic structural diagram of an electronic device according to an embodiment of the present application. The electronic device may include:
a memory 601, a processor 602, and a computer program stored in the memory 601 and capable of running in the processor 602.

The processor 602 executes the program to implement the Internet of vehicles-based digital commodity processing method provided in the foregoing embodiment.

Further, the electronic device further includes:
a communication interface 603, configured for communication between the memory 601 and the processor 602.

The memory 601 is configured to store the computer program capable of running in the processor 602.

The memory 601 may include a high-speed Random Access Memory (RAM), or may further include a non-volatile memory, for example, at least one disk memory.

If the memory 601, the processor 602, and the communication interface 603 are independently implemented, the communication interface 603, the memory 601, and the processor 602 may be connected with one another and complete communication with one another through a bus. The bus may be an Industry Standard Architecture (ISA) bus, a Peripheral Component Interconnect (PCI) bus, an Extended Industry Standard Component (EISA) bus, etc. The bus may be divided into an address bus, a data bus, a control bus, etc. For ease of representation, only one bold line is used for representation in Fig. 6, but it does not mean that there is only one bus or one type of bus.

Optionally, in specific implementation, if the memory 601, the processor 602, and the communication interface 603 are integrated into a chip, the memory 601, the processor 602, and the communication interface 603 may complete communication with one another through an internal interface.

The processor 602 may be a Central Processing Unit (CPU), an Application Specific Integrated Circuit (ASIC), or one or more integrated circuits configured to implement the embodiments of the present application.

An embodiment of the present application also provides a computer-readable storage medium, storing a computer program that is executed by a processor to implement the foregoing Internet of vehicles-based digital commodity processing method.

In the descriptions of this specification, descriptions made with reference to terms "an embodiment", "some embodiments", "example", "specific example", "some examples", or the like refer to that specific features, structures, materials, or characteristics described in combination with this embodiment or example are included in at least one embodiment or example of the present application. In this specification, these terms are not always schematically expressed for the same embodiment or example. Moreover, the specific features, structures, materials, or characteristics that are described may be combined in any one or N embodiments or examples as appropriate. In addition, those skilled in the art may integrate and combine different embodiments or examples described in this specification and features of different embodiments or examples without conflicts.

In addition, terms "first" and "second" are only for description and cannot be understood to indicate or imply relative importance or implicitly indicate the quantity of indicated technical features. Therefore, a feature defined by "first" and "second" may explicitly or implicitly indicate inclusion of at least one such feature. In the descriptions of the present application, "N" means at least two, for example, two or three, unless otherwise limited definitely and specifically.

Any process or method in the flowcharts or described herein in another manner may be understood to represent a module, segment, or part including codes of one or N executable instructions for realizing specific logic functions or steps of the process, and moreover, the scope of a preferred implementation mode of the present application includes other implementation, not in a sequence shown or discussed herein, including execution of involved functions basically simultaneously or in an opposite sequence according to the functions. This needs to be understood by those skilled in the art of the embodiments of the present application.

Logics and/or steps represented in the flowcharts or described herein in another manner, for example, may be considered as a fixed sequence list of executable instructions for realizing the logic functions, and may specifically be implemented in any computer-readable medium for an instruction execution system, apparatus, or device (for example, a computer-based system, a system including a processor, or another system capable of reading instructions from the instruction execution system, apparatus, or device and executing the instructions) to use or for use in combination with the instruction execution system, apparatus, or device. For this specification, the "computer-readable medium" may be any apparatus capable of including, storing, communicating with, propagating, or transmitting a program for the instruction execution system, apparatus, or device to use or for use in combination with the instruction execution system, apparatus, or device. A more specific example (non-exhaustive list) of the computer-readable medium includes: an electric connection portion (electronic apparatus) with one or more wires, a portable computer disk (magnetic apparatus), a RAM, a Read-Only Memory (ROM), an Erasable Programmable ROM (EPROM) (or flash memory), an optical fiber apparatus, and a portable Compact Disc Read-Only Memory (CDROM). In addition, the computer-readable medium may even be paper or another medium on which the program may be printed because, for example, the paper or the another medium may be optically scanned and then edited, interpreted, or, when necessary, processed in another proper manner to electronically obtain the program for storage in the computer memory.

It is to be understood that each part of the present application may be implemented by hardware, software, firmware, or a combination thereof. In the foregoing implementation mode, N steps or methods may be implemented by software or firmware stored in the memory and executed by a proper instruction execution system. For example, in case of implementation with the hardware, like another implementation mode, any one or combination of the following technologies well-known in this art may be used for implementation: a discrete logic circuit with a logic gate circuit configured to realize a logic function for a data signal, an ASIC with a proper combined logic gate circuit, a Programmable Gate Array (PGA), a Field Programmable Gate Array (FPGA), and the like.

Those of ordinary skill in the art can understand that all or part of the steps in the method of the foregoing embodiment may be completed by a program by instructing related hardware. The program may be stored in a computer-readable storage medium. When the program is executed, one or combination of the steps of the method embodiment is included.

In addition, each function unit in each embodiment of the present application may be integrated into a processing module. Alternatively, each unit may be an independent physical existence. Alternatively, two or more units may be integrated into a module. The integrated module may be implemented in a hardware form, or in a form of a software function module. When being implemented in the form of the software function module and sold or used as an independent product, the integrated module may be stored in a computer-readable storage medium.

The storage medium may be a ROM, a magnetic disk, an optical disk, or the like. Although the embodiments of the present application have been shown or described above, it can be understood that the foregoing embodiments are exemplary and cannot be understood as limitations on the present application. Those of ordinary skill in the art may make variations, modifications, replacements, and transformations to the foregoing embodiments within the scope of the present application.

## Claims

1. An Internet of vehicles-based digital commodity processing method, applied to a cloud, the method comprising the following steps:
(S110): establishing a device model corresponding to each vehicle-mounted device based on an available function and communication mode of each vehicle-mounted device on a target vehicle, the vehicle-mounted devices comprising a gateway device, a gateway sub device, and a direct connection device;
(S120): determining an association relationship between the device models based on an association relationship between the gateway device, the gateway sub device, and the direct connection device;
(S130): generating a method routing table corresponding to available service on the target vehicle based on the association relationship between the device models; and
(S140): associating, based on a function requirement corresponding to a digital commodity to be created, a method routing table corresponding to available service corresponding to the function requirement, to obtain a target digital commodity.

2. The method according to claim 1, wherein the associating, based on a function requirement corresponding to a digital commodity to be created, a method routing table corresponding to available service corresponding to the function requirement, to obtain a target digital commodity comprises:
allocating corresponding commodity identification information to the digital commodity to be created; and
associating, based on the function requirement corresponding to the digital commodity to be created, the commodity identification information with the method routing table corresponding to the available service corresponding to the function requirement, and setting corresponding commodity attribute information, to obtain the target digital commodity.

3. The method according to claim 1 or 2, wherein after the associating, based on a function requirement corresponding to a digital commodity to be created, a method routing table corresponding to available service corresponding to the function requirement, to obtain a target digital commodity, the method further comprises:
setting the target digital commodity for sale so as to add the target digital commodity to a target platform for release; and
displaying, in response to receiving a browsing request of a target terminal for a digital commodity in the target platform, a digital commodity list in a display interface of the target terminal, the digital commodity list comprising at least one target digital commodity.

4. The method according to claim 3, wherein after the displaying, in response to receiving a browsing request of a target terminal for a digital commodity in the target platform, a digital commodity list in a display interface of the target terminal, the method further comprises:
displaying, in response to selection information of the target terminal for any target digital commodity in the digital commodity list, a detail page of the selected target digital commodity in the display interface of the target terminal;
obtaining application version information of the target terminal in response to receiving a subscription request of the target terminal for the selected target digital commodity; and
checking the application version information of the target terminal and applicable version information of the selected target digital commodity, and if checking succeeds, completing subscription of the selected target digital commodity, or if checking fails, displaying prompting information for prompting a version error in the display interface of the target terminal.

5. The method according to claim 4, wherein after the completing subscription of the selected target digital commodity, the method further comprises:
generating order information to be activated corresponding to the target digital commodity that is subscribed to;
sending, in response to receiving an activation request of the target terminal for the order information, an activation configuration code to the target terminal such that the target terminal activates the order information based on the activation configuration code; and
if activation succeeds, synchronizing information of the successfully activated target digital commodity to a user right center, and generating a right validity period based on the order information.

6. An Internet of vehicles-based digital commodity processing method, applied to a target vehicle, the method comprising:
sending, to a cloud, a browsing request for a digital commodity in a target platform; and
receiving and displaying a digital commodity list fed back by the cloud, the digital commodity list comprising at least one target digital commodity, and the target digital commodity being obtained by the Internet of vehicles-based digital commodity processing method according to any one of claims 1 to 5.

7. The method according to claim 6, further comprising:
sending, to the cloud in response to a selection operation for any target digital commodity in the digital commodity list, selection information for the target digital commodity;
receiving and displaying a detail page, fed back by the cloud, of the selected target digital commodity;
sending, in response to a subscription operation for the target digital commodity, a corresponding subscription request to the cloud such that the cloud checks application version information of the target vehicle and applicable version information of the target digital commodity to be subscribed to, and if checking succeeds, completes subscription, or if checking fails, generates prompting information for prompting a version error;
receiving and displaying the prompting information that is fed back by the cloud and used for prompting the version error;
sending, to the cloud in response to an upgrade operation for the prompting information, an upgrade request for the application version information such that the cloud feeds back a corresponding upgraded data packet based on the upgrade request; and
receiving the upgraded data packet, and performing application upgrade based on the upgraded data packet, to complete subscription of the target digital commodity.

8. The method according to claim 7, wherein after the completing subscription of the target digital commodity, the method further comprises:
receiving and displaying order information to be activated that is sent by the cloud and corresponds to the target digital commodity that is subscribed to;
sending, to the cloud based on an activation operation for the order information, an activation request for the order information such that the cloud feeds back a corresponding activation configuration code based on the activation request;
receiving the activation configuration code, and activating the order information based on the activation configuration code; and
synchronizing information of the successfully activated target digital commodity to a user right center, and recording a right validity period in the user right center.

9. An Internet of vehicles-based digital commodity processing apparatus, applied to a cloud, the apparatus comprising:
a model establishment module (910), configured to establish a device model corresponding to each vehicle-mounted device based on an available function and communication mode of each vehicle-mounted device on a target vehicle, the vehicle-mounted devices comprising a gateway device, a gateway sub device, and a direct connection device;
an association module (920), configured to determine an association relationship between the device models based on an association relationship between the gateway device, the gateway sub device, and the direct connection device;
a route generation module (930), configured to generate a method routing table corresponding to available service on the target vehicle based on the association relationship between the device models; and
a first processing module (940), configured to associate, based on a function requirement corresponding to a digital commodity to be created, a method routing table corresponding to available service corresponding to the function requirement, to obtain a target digital commodity.

10. The apparatus according to claim 9, wherein the first processing module is configured to:
allocate corresponding commodity identification information to the digital commodity to be created; and
associate, based on the function requirement corresponding to the digital commodity to be created, the commodity identification information with the method routing table corresponding to the available service corresponding to the function requirement, and set corresponding commodity attribute information, to obtain the target digital commodity.

11. The apparatus according to claim 9 or 10, wherein after associating, based on the function requirement corresponding to the digital commodity to be created, the method routing table corresponding to the available service corresponding to the function requirement, to obtain the target digital commodity, the first processing module is further configured to:
set the target digital commodity for sale so as to add the target digital commodity to a target platform for release; and
display, in response to receiving a browsing request of a target terminal for a digital commodity in the target platform, a digital commodity list in a display interface of the target terminal, the digital commodity list comprising at least one target digital commodity.

12. The apparatus according to claim 11, wherein after displaying, in response to receiving the browsing request of the target terminal for the digital commodity in the target platform, the digital commodity list in the display interface of the target terminal, the first processing module is further configured to:
display, in response to selection information of the target terminal for any target digital commodity in the digital commodity list, a detail page of the selected target digital commodity in the display interface of the target terminal;
obtain application version information of the target terminal in response to receiving a subscription request of the target terminal for the selected target digital commodity; and
check the application version information of the target terminal and applicable version information of the selected target digital commodity, and if checking succeeds, complete subscription of the selected target digital commodity, or if checking fails, display prompting information for prompting a version error in the display interface of the target terminal.

13. The apparatus according to claim 12, wherein after completing subscription of the selected target digital commodity, the first processing module is further configured to:
generate order information to be activated corresponding to the target digital commodity that is subscribed to;
send, in response to receiving an activation request of the target terminal for the order information, an activation configuration code to the target terminal such that the target terminal activates the order information based on the activation configuration code; and
if activation succeeds, synchronize information of the successfully activated target digital commodity to a user right center, and generate a right validity period based on the order information.

14. An Internet of vehicles-based digital commodity processing apparatus, applied to a target vehicle, the apparatus comprising:
a sending module, configured to send, to a cloud, a browsing request for a digital commodity in a target platform; and
a second processing module, configured to receive and display a digital commodity list fed back by the cloud, the digital commodity list comprising at least one target digital commodity, and the target digital commodity being obtained by the Internet of vehicles-based digital commodity processing method according to any one of claims 1 to 5.

15. The apparatus according to claim 14, wherein the second processing module is further configured to:
send, to the cloud in response to a selection operation for any target digital commodity in the digital commodity list, selection information for the target digital commodity;
receive and display a detail page, fed back by the cloud, of the selected target digital commodity;
send, in response to a subscription operation for the target digital commodity, a corresponding subscription request to the cloud such that the cloud checks application version information of the target vehicle and applicable version information of the target digital commodity to be subscribed to, and if checking succeeds, completes subscription, or if checking fails, generates prompting information for prompting a version error;
receive and display the prompting information that is fed back by the cloud and used for prompting the version error;
send, to the cloud in response to an upgrade operation for the prompting information, an upgrade request for the application version information such that the cloud feeds back a corresponding upgraded data packet based on the upgrade request; and
receive the upgraded data packet, and perform application upgrade based on the upgraded data packet, to complete subscription of the target digital commodity.

16. The apparatus according to claim 15, wherein after completing subscription of the target digital commodity, the second processing module is further configured to:
receive and display order information to be activated that is sent by the cloud and corresponds to the target digital commodity that is subscribed to;
send, to the cloud based on an activation operation for the order information, an activation request for the order information such that the cloud feeds back a corresponding activation configuration code based on the activation request;
receive the activation configuration code, and activate the order information based on the activation configuration code; and
synchronize information of the successfully activated target digital commodity to a user right center, and record a right validity period in the user right center.

## Amended claims

### Amended claims in accordance with Rule 137(2) EPC.

1. An Internet of vehicles-based digital commodity processing method, applied to a cloud, the method comprising the following steps:
(S110): establishing a device model corresponding to each vehicle-mounted device based on an available function and communication mode of each vehicle-mounted device on a target vehicle, the vehicle-mounted devices comprising a gateway device, a gateway sub device, and a direct connection device;
(S120): determining an association relationship between the device models based on an association relationship between the gateway device, the gateway sub device, and the direct connection device;
(S130): generating a method routing table corresponding to available service on the target vehicle based on the association relationship between the device models, wherein each uplink/downlink event and behavior is routed as required by enabling, disabling, or configuration of a responding rule on the method routing table, one function is associated with one or more methods; and
(S140): associating, based on a function requirement corresponding to a digital commodity to be created, a method routing table corresponding to available service corresponding to the function requirement, to obtain a target digital commodity, wherein the associating, based on a function requirement corresponding to a digital commodity to be created, a method routing table corresponding to available service corresponding to the function requirement, to obtain a target digital commodity comprises:
allocating corresponding commodity identification information to the digital commodity to be created; and
associating, based on the function requirement corresponding to the digital commodity to be created, the commodity identification information with the method routing table corresponding to the available service corresponding to the function requirement, and setting corresponding commodity attribute information, to obtain the target digital commodity.

2. The method according to claim 1, wherein after the associating, based on a function requirement corresponding to a digital commodity to be created, a method routing table corresponding to available service corresponding to the function requirement, to obtain a target digital commodity, the method further comprises:
setting the target digital commodity for sale so as to add the target digital commodity to a target platform for release; and
displaying, in response to receiving a browsing request of a target terminal for a digital commodity in the target platform, a digital commodity list in a display interface of the target terminal, the digital commodity list comprising at least one target digital commodity.

3. The method according to claim 2, wherein after the displaying, in response to receiving a browsing request of a target terminal for a digital commodity in the target platform, a digital commodity list in a display interface of the target terminal, the method further comprises:
displaying, in response to selection information of the target terminal for any target digital commodity in the digital commodity list, a detail page of the selected target digital commodity in the display interface of the target terminal;
obtaining application version information of the target terminal in response to receiving a subscription request of the target terminal for the selected target digital commodity; and
checking the application version information of the target terminal and applicable version information of the selected target digital commodity, and if checking succeeds, completing subscription of the selected target digital commodity, or if checking fails, displaying prompting information for prompting a version error in the display interface of the target terminal.

4. The method according to claim 3, wherein after the completing subscription of the selected target digital commodity, the method further comprises:
generating order information to be activated corresponding to the target digital commodity that is subscribed to;
sending, in response to receiving an activation request of the target terminal for the order information, an activation configuration code to the target terminal such that the target terminal activates the order information based on the activation configuration code; and
if activation succeeds, synchronizing information of the successfully activated target digital commodity to a user right center, and generating a right validity period based on the order information.

5. An Internet of vehicles-based digital commodity processing method, applied to a target vehicle, the method comprising:
sending, to a cloud, a browsing request for a digital commodity in a target platform; and
receiving and displaying a digital commodity list fed back by the cloud, the digital commodity list comprising at least one target digital commodity, and the target digital commodity being obtained by the Internet of vehicles-based digital commodity processing method according to any one of claims 1 to 4.

6. The method according to claim 5, further comprising:
sending, to the cloud in response to a selection operation for any target digital commodity in the digital commodity list, selection information for the target digital commodity;
receiving and displaying a detail page, fed back by the cloud, of the selected target digital commodity;
sending, in response to a subscription operation for the target digital commodity, a corresponding subscription request to the cloud such that the cloud checks application version information of the target vehicle and applicable version information of the target digital commodity to be subscribed to, and if checking succeeds, completes subscription, or if checking fails, generates prompting information for prompting a version error;
receiving and displaying the prompting information that is fed back by the cloud and used for prompting the version error;
sending, to the cloud in response to an upgrade operation for the prompting information, an upgrade request for the application version information such that the cloud feeds back a corresponding upgraded data packet based on the upgrade request; and
receiving the upgraded data packet, and performing application upgrade based on the upgraded data packet, to complete subscription of the target digital commodity.

7. The method according to claim 6, wherein after the completing subscription of the target digital commodity, the method further comprises:
receiving and displaying order information to be activated that is sent by the cloud and corresponds to the target digital commodity that is subscribed to;
sending, to the cloud based on an activation operation for the order information, an activation request for the order information such that the cloud feeds back a corresponding activation configuration code based on the activation request;
receiving the activation configuration code, and activating the order information based on the activation configuration code; and
synchronizing information of the successfully activated target digital commodity to a user right center, and recording a right validity period in the user right center.

8. An Internet of vehicles-based digital commodity processing apparatus, applied to a cloud, the apparatus comprising:
a model establishment module (910), configured to establish a device model corresponding to each vehicle-mounted device based on an available function and communication mode of each vehicle-mounted device on a target vehicle, the vehicle-mounted devices comprising a gateway device, a gateway sub device, and a direct connection device;
an association module (920), configured to determine an association relationship between the device models based on an association relationship between the gateway device, the gateway sub device, and the direct connection device;
a route generation module (930), configured to generate a method routing table corresponding to available service on the target vehicle based on the association relationship between the device models, wherein each uplink/downlink event and behavior is routed as required by enabling, disabling, or configuration of a responding rule on the method routing table, one function is associated with one or more methods; and
a first processing module (940), configured to associate, based on a function requirement corresponding to a digital commodity to be created, a method routing table corresponding to available service corresponding to the function requirement, to obtain a target digital commodity, wherein the first processing module is configured to:
allocate corresponding commodity identification information to the digital commodity to be created; and
associate, based on the function requirement corresponding to the digital commodity to be created, the commodity identification information with the method routing table corresponding to the available service corresponding to the function requirement, and set corresponding commodity attribute information, to obtain the target digital commodity.

9. The apparatus according to claim 8, wherein after associating, based on the function requirement corresponding to the digital commodity to be created, the method routing table corresponding to the available service corresponding to the function requirement, to obtain the target digital commodity, the first processing module is further configured to:
set the target digital commodity for sale so as to add the target digital commodity to a target platform for release; and
display, in response to receiving a browsing request of a target terminal for a digital commodity in the target platform, a digital commodity list in a display interface of the target terminal, the digital commodity list comprising at least one target digital commodity.

10. The apparatus according to claim 9, wherein after displaying, in response to receiving the browsing request of the target terminal for the digital commodity in the target platform, the digital commodity list in the display interface of the target terminal, the first processing module is further configured to:
display, in response to selection information of the target terminal for any target digital commodity in the digital commodity list, a detail page of the selected target digital commodity in the display interface of the target terminal;
obtain application version information of the target terminal in response to receiving a subscription request of the target terminal for the selected target digital commodity; and
check the application version information of the target terminal and applicable version information of the selected target digital commodity, and if checking succeeds, complete subscription of the selected target digital commodity, or if checking fails, display prompting information for prompting a version error in the display interface of the target terminal.

11. The apparatus according to claim 10, wherein after completing subscription of the selected target digital commodity, the first processing module is further configured to:
generate order information to be activated corresponding to the target digital commodity that is subscribed to;
send, in response to receiving an activation request of the target terminal for the order information, an activation configuration code to the target terminal such that the target terminal activates the order information based on the activation configuration code; and
if activation succeeds, synchronize information of the successfully activated target digital commodity to a user right center, and generate a right validity period based on the order information.

12. An Internet of vehicles-based digital commodity processing apparatus, applied to a target vehicle, the apparatus comprising:
a sending module, configured to send, to a cloud, a browsing request for a digital commodity in a target platform; and
a second processing module, configured to receive and display a digital commodity list fed back by the cloud, the digital commodity list comprising at least one target digital commodity, and the target digital commodity being obtained by the Internet of vehicles-based digital commodity processing method according to any one of claims 1 to 4.

13. The apparatus according to claim 12, wherein the second processing module is further configured to:
send, to the cloud in response to a selection operation for any target digital commodity in the digital commodity list, selection information for the target digital commodity;
receive and display a detail page, fed back by the cloud, of the selected target digital commodity;
send, in response to a subscription operation for the target digital commodity, a corresponding subscription request to the cloud such that the cloud checks application version information of the target vehicle and applicable version information of the target digital commodity to be subscribed to, and if checking succeeds, completes subscription, or if checking fails, generates prompting information for prompting a version error;
receive and display the prompting information that is fed back by the cloud and used for prompting the version error;
send, to the cloud in response to an upgrade operation for the prompting information, an upgrade request for the application version information such that the cloud feeds back a corresponding upgraded data packet based on the upgrade request; and
receive the upgraded data packet, and perform application upgrade based on the upgraded data packet, to complete subscription of the target digital commodity.

14. The apparatus according to claim 13, wherein after completing subscription of the target digital commodity, the second processing module is further configured to:
receive and display order information to be activated that is sent by the cloud and corresponds to the target digital commodity that is subscribed to;
send, to the cloud based on an activation operation for the order information, an activation request for the order information such that the cloud feeds back a corresponding activation configuration code based on the activation request;
receive the activation configuration code, and activate the order information based on the activation configuration code; and
synchronize information of the successfully activated target digital commodity to a user right center, and record a right validity period in the user right center.
